# EUROPÄISCHE PATENTSCHRIFT

(11) **EP 2 122 710 B1**
(45) Veröffentlichungstag und Bekanntmachung des Hinweises auf die Patenterteilung: **10.04.2013**
(21) Anmeldenummer: 08715818.4
(22) Anmeldetag: 16.02.2008
(51) Int. Cl.: H01M 2/02, H01M 4/24, H01M 4/62, H01M 10/34, H01M 4/02

(54) **GALVANISCHES ELEMENT MIT HOHER KAPAZITÄT**
GALVANIC ELEMENT WITH A HIGH CAPACITY
ÉLÉMENT GALVANIQUE DE GRANDE CAPACITÉ

(30) Priorität: 16.02.2007 DE 102007009295
(43) Veröffentlichungstag der Anmeldung: 25.11.2009
(73) Patentinhaber: VARTA Microbattery GmbH, 73479 Ellwangen (DE)
(72) Erfinder: PYTLIK, Eduard, 73479 Ellwangen (DE); PERNER, Arno, 80339 München (DE); KREBS, Martin, 73494 Rosenberg (DE); ILIC, Dejan, 73479 Ellwangen (DE)
(74) Vertreter: Patentanwälte Ruff, Wilhelm, Beier, Dauster & Partner
(86) Internationale Anmeldenummer: PCT/EP2008/001218
(87) Internationale Veröffentlichungsnummer: WO 2008/098793

(56) Entgegenhaltungen:
- EP-A- 0 460 424
- US-A- 2 988 585
- US-A- 4 637 967
- US-A- 5 034 289
- US-A- 5 219 678
- US-A1- 2001 016 282

## Beschreibung

Die vorliegende Erfindung betrifft eine Knopfzelle mit einer positiven Elektrode, einer negativen Elektrode und einem Separator, die in einem Gehäuse aus einem Zellenbecher und einem Zellendeckel angeordnet sind, welche durch eine Dichtung gegeneinander isoliert sind.

Galvanische Elemente wie Batterien und Akkumulatoren finden heute in vielerlei Bereichen Anwendung. Sie dienen insbesondere zur Versorgung portabler Geräte mit elektrischer Energie. In sehr kleine Geräte wie Uhren und Hörgeräte werden die galvanischen Elemente vorzugsweise in Form von Knopfzellen eingesetzt. Besonders Hörgeräte weisen einen sehr hohen Stromverbrauch auf. Man unterscheidet bei modernen Hörgeräten zwischen "hinter dem Ohr"-Geräten (HdO) und "im Ohr"-Geräten (IdO) sowie Kanalgeräten, die direkt in den Hörgang eingesetzt werden. Der Stromverbrauch dieser Geräte hängt insbesondere von der Verstärkerleistung ab. Bei höherwertigen Geräten sind zusätzlich noch Mikrocomputer und Funkeinrichtungen integriert, die ebenfalls mit Strom versorgt werden müssen.

Aufgrund des hohen Stromverbrauchs werden Hörgeräte in aller Regel mit Batterien des elektrochemischen Systems Zink-Luft versorgt, die sich durch eine besonders hohe Kapazität auszeichnen. Zink-Luft-Knopfzellen sind im wesentlichen in vier verschiedenen Baugrößen im Handel erhältlich (gemäß dem Standard IEC 60086-2). Mit Zink-Luft-Batterien in standardisierten Größen können Hörgeräte in der Regel zwischen 3 Tage und 3 Wochen mit Energie versorgt werden.

Zink-Luft-Batterien sind nicht wiederaufladbar und müssen entsprechend nach dem Gebrauch entsorgt werden. Dies ist allerdings problematisch, da sie etwa 1 Gew.-% Quecksilber enthalten, das nicht in die Umwelt gelangen sollte. Zudem ist der dauerhafte Gebrauch eines Hörgerätes entsprechend mit hohen Kosten verbunden. Aus diesem Grund werden vermehrt wiederaufladbare Batterien nachgefragt. Als solche sind insbesondere Nickelmetallhydrid-Batterien geeignet, da diese die gleiche Spannungslage wie Zink-Luft-Batterien und eine hohe Strombelastbarkeit aufweisen. Im Vergleich zu Zink-Luft-Batterien weisen sie allerdings eine sehr geringe Kapazität auf. Die maximale Laufzeit von Nickelmetallhydrid-Batterien in den vier oben erwähnten Baugrößen beträgt in der Regel weniger als 1 Tag, so dass sie sehr häufig wiederaufgeladen oder ausgetauscht werden müssen.

In der US 2001/0016282 ist ein Nickel-Metallhydrid-Akkumulator in Form einer Knopfzelle beschrieben, dessen Elektroden ein Träger- und Ableitergerüst besitzen, welches aus einem porösem Metallschaum oder Metallfilz besteht. Das Gerüst hat somit gleichzeitig eine tragende Funktion und eine elektrische, nämlich als Ableiter.

In der US 4,637,967 sind Elektroden aus Wasserstoffspeicherlegierungen beschrieben, die aus einer Schmelze durch plötzliche Abkühlung hergestellt wurden. Die Wasserstoffspeicherlegierung weist einen nichtpartikulären Charakter auf und ist bereits deshalb selbsttragend.

Aus der US 2,988,585 sind Alkalibatterien bekannt, die durch Druck komprimierte Elektroden aufweisen. Als Aktivmaterial für die negative Elektrode wird insbesondere Kadmium beschrieben. Wasserstoffspeicherlegierungen sind in dieser Druckschrift nicht erwähnt.

In der US 5,034,289 sind Elektroden beschrieben, die eine Matrix aus einem Nickelschaum aufweisen, die mit einer Pastenmischung enthaltend ein Wasserstoffspeichermaterial befüllt ist. Die Matrix aus dem Nickelschaum gewährleistet die erforderliche Stabilität der Elektroden. Aus der EP 0 460 424 und der US 5,219,678 sind alkalische Rundzellen bekannt, die dünne, gewalzte Elektroden aufweisen. Derartige Elektroden finden allerdings in Knopfzellen in der Regel keine Verwendung.

Der vorliegenden Erfindung liegt die Aufgabe zugrunde, wiederaufladbare Batterien, insbesondere für Hörgeräte, bereitzustellen, die eine höhere Kapazität als vergleichbare bekannte Batterien aufweisen. Darüber hinaus sollen die Batterien auch eine hervorragende Zyklenstabilität aufweisen.

Diese Aufgabe wird gelöst durch die Knopfzelle mit den Merkmalen des Anspruchs 1. Bevorzugte Ausführungsformen der erfindungsgemäßen Knopfzelle sind in den Ansprüchen 2 bis 12 angegeben. Der Wortlaut sämtlicher Ansprüche wird hiermit durch Bezugnahme zum Inhalt dieser Beschreibung gemacht.

Eine erfindungsgemäße Knopfzelle weist eine positive Elektrode, eine negative Elektrode und einen Separator auf. Diese sind in einem Gehäuse aus einem Zellenbecher und einem Zellendeckel angeordnet, welche durch eine Dichtung gegeneinander isoliert sind. Eine erfindungsgemäße Knopfzelle zeichnet sich insbesondere dadurch aus, dass die negative Elektrode als Preßling mit selbsttragender Struktur vorliegt. Vorzugsweise weist der Preßling die Form einer Tablette auf.

Zu Tabletten verpreßte Masseelektroden sind aus dem Stand der Technik bereits bekannt, so z. B. aus der DE 43 43 435 A1, in der ein gasdicht verschlossener alkalischer Akkumulator in Form einer Knopfzelle beschrieben wird. Allerdings war es bislang stets erforderlich, die Tabletten vor dem Einsetzen in ein Gehäuse in ein Körbchen aus Nickeldraht einzusetzen. Das Nickel-Körbchen hatte dabei sowohl eine ableitende Funktion als auch insbesondere eine Stützfunktion, da aus dem Stand der Technik bekannte zu Tabletten verpreßte Masseelektroden eine unzureichende strukturelle Integrität aufweisen und entsprechend im Betrieb zerfallen können.

Im Gegensatz dazu weist eine erfindungsgemäße Knopfzelle insbesondere eine negative Elektrode mit selbsttragender Struktur auf, also eine Elektrode, die ohne das sonst übliche Körbchen verbaut werden kann. Ein solches stützendes separates Bauteil ist nicht erforderlich und erfindungsgemäß auch nicht vorgesehen.

Die Herstellung einer erfindungsgemäß geeigneten, als Preßling vorliegenden Elektrode mit selbsttragender Struktur ist mit Schwierigkeiten verbunden, was insbesondere darin begründet liegt, dass der Preßling bei der Herstellung nicht zu stark verdichtet werden darf, da er ansonsten eine zu geringe Porosität aufweist, um ausreichend Elektrolyt aufnehmen zu können. Ist der Druck dagegen zu niedrig, so ist die entstehende Struktur instabil.

Deshalb besteht die negative Elektrode einer erfindungsgemäßen Knopfzelle aus einem Pulver, das bei einem Druck zwischen 40 kN/cm² und 120 kN/cm² verdichtet wurde. In diesem Bereich sind Werte zwischen 40 kN/cm² und 120 kN/cm² weiter bevorzugt.

Es ist erfindungsgemäß besonders bevorzugt, dass die negative Elektrode eine Dichte zwischen 5,0 g/cm³ und 7,5 g/cm³, insbesondere zwischen 5,0 g/cm³ und 6,5 g/cm³, aufweist.

Die negative Elektrode weist eine Wasserstoffspeicherlegierung als Aktivmaterial auf. Bei dieser handelt es sich insbesondere um eine sogenannte AB₅-Legierung, also beispielsweise eine Legierung aus einem oder mehreren Seltenerdenmetallen wie Lanthan und Nickel im Verhältnis 1 : 5. Gegebenenfalls kann die Wasserstoffspeicherlegierung noch ein oder mehrere weitere Metalle als Zusätze enthalten.

Der Verzicht auf das Körbchen, das aufgrund der selbsttragenden Struktur der negativen Elektrode eines erfindungsgemäßen galvanischen Elements überflüssig ist, hat zur Folge, dass mehr Aktivmaterial in ein Batteriegehäuse einer definierten Dimension eingebracht werden kann. Entsprechend weist eine erfindungsgemäße Knopfzelle eine vergleichsweise höhere Kapazität auf.

In bevorzugten Ausführungsformen liegt die Wasserstoffspeicherlegierung in Partikelform mit einer mittleren Partikelgröße zwischen 0,1 µm und 100 µm, vorzugsweise zwischen 10 µm und 50 µm, vor.

Erfindungsgemäß umfasst die negative Elektrode mindestens ein hydrophobes, nicht wasserlösliches Polymer. Das mindestens eine Polymer kann insbesondere in den durch gegenseitigen Kontakt von Partikeln aus der Wasserstoffspeicherlegierung gebildeten Zwischenräumen vorliegen und auf der Oberflächen der Legierung verteilt sein. Dabei kann das mindestens eine Polymer Bereiche in der Elektrode ausbilden, die von Elektrolyt nicht oder nur wenig benetzt werden können.

Bei dem mindestens einen Polymer handelt es sich vorzugsweise um ein Polyolefin, insbesondere um ein halogeniertes Polyolefin, besonders bevorzugt um ein Polyhalogenolefin.

In Weiterbildung ist es bevorzugt, dass das mindestens eine Polymer ein fluoriertes oder perfluoriertes Polymer, insbesondere PTFE (Polytetrafluorethylen) und/oder PCTFE (Polychlortrifluorethylen)) ist.

Das mindestens eine Polymer liegt in der negativen Elektrode bevorzugt in einem Anteil zwischen 0,1 Gew.-% und 5 Gew.-%, insbesondere zwischen 0,5 Gew.-% und 3 Gew.-%, besonders bevorzugt zwischen 0,5 Gew.-% und 2 Gew.-%, vor.

Vorzugsweise liegt das mindestens eine Polymer in Partikelform mit einer mittleren Partikelgröße zwischen 0,1 µm und 100 µm, vorzugsweise zwischen 10 µm und 50 µm, in der negativen Elektrode vor.

Die negative Elektrode kann in einigen bevorzugten Ausführungsformen mindestens ein Leitmittel aufweisen, insbesondere aus der Gruppe mit kohlenstoffbasierten, vorzugsweise amorphen Leitmitteln und metallischen Leitmitteln.

Vorzugsweise weist die negative Elektrode mindestens ein Metallpulver, insbesondere Nickelpulver, als Leitmittel auf.

Weiterhin kann die negative Elektrode Russ und/oder Graphit als Leitmittel aufweisen.

Das mindestens eine Leitmittel ist in der mindestens einen negativen Elektrode bevorzugt in einem Anteil zwischen 0,1 und 10 Gew.-%, insbesondere zwischen 0,5 Gew.-% und 5 Gew.-%, besonders bevorzugt zwischen 0,5 Gew.-% und 3 Gew.-%, enthalten.

Besonders bevorzugt ist es wenn die negative Elektrode einen Porengehalt zwischen 0,5 Vol-% und 40 Vol.-%, vorzugsweise zwischen 0,5 Vol-% und 15 Vol.-%, insbesondere zwischen 5 Vol-% und 10 Vol-%, aufweist (ein entsprechender Volumenanteil Elektrolyt kann von einer entsprechenden negativen Elektrode aufgenommen werden).

Wenn die negative Elektrode im wesentlichen ausschließlich aus einer Wasserstoffspeicherlegierung gepresst ist, also im wesentlichen frei von dem mindestens einen Polymer und/oder dem mindestens einen Leitmittel ist, so weist sie bevorzugt einen Porengehalt zwischen 25 Vol-% und 40 Vol.-% auf.

In einer besonders bevorzugten Ausführungsform der erfindungsgemäßen Knopfzelle weist diese eine positive Elektrode auf, bei der das Aktivmaterial in einen leitfähigen Träger eingebettet ist.

Elektroden, bei denen das Aktivmaterial in einen leitfähigen Träger eingebettet ist, sind in der oben bereits erwähnten DE 43 43 435 A1 ausführlich beschrieben.

Bei dem leitfähigen Träger kann es sich insbesondere um einen Metallschwamm (auch als "Schaummetall" bekannt) oder einen Metallfilz handeln. Bezüglich der Eigenschaften besonders geeigneter leitfähigen Träger wird auf die DE 43 43 435 A1 verwiesen, in der diese ausführlich beschrieben sind. So sind Metallschwämme mit einem Porengehalt zwischen 85 Vol.-% und 97 Vol.-%, insbesondere von ca. 95 Vol.-%, besonders bevorzugt. Die Porengröße geeigneter Metallschwämme liegt insbesondere zwischen 50 µm und 500 µm.

Besonders bevorzugt besteht der leitfähige Träger aus mindestens einem Metall, insbesondere aus Nickel.

In der DE 43 43 435 A1 ist erwähnt, dass die Verwendung eines solchen leitfähigen Trägers es ermöglicht, auf ein Metallkörbchen, das die positive Elektrode umhüllt, zu verzichten. Entsprechend ist auch eine erfindungsgemäße Knopfzelle auf der Seite der positiven Elektrode in einer besonders bevorzugten Ausführungsform frei von dem bereits beschriebenen Metallkörbchen mit Stütz- und Ableiterfunktion. Der leitfähige Träger weist wie die oben beschriebene, als Preßling vorliegende negative Elektrode eine selbsttragende Struktur auf und übernimmt darüber hinaus die Funktion eines Ableiters.

Die positive Elektrode weist als Aktivmaterial bevorzugt Nickelhydroxid und/oder Nickeloxidhydroxid auf, das beispielsweise als homogene wäßrige Paste in den leitfähigen Träger eingebracht werden kann. Zudem kann die positive Elektrode Zusätze wie Bindemittel und insbesondere Leitmittel enthalten.

Vorzugsweise weist eine erfindungsgemäße Knopfzelle ein metallisches Gehäuse auf. Besonders geeignet sind Zellenbecher und/ oder Zellendeckel aus Edelstahl/nickelplatiertem Stahl. Auch Gehäuse aus einem sogenannten Trimetall (eine Schichtanordnung aus drei Metallen), insbesondere aus Stahlblech mit einer innenliegenden Beschichtung aus Kupfer und einer außenliegenden Beschichtung aus Nickel, sind bevorzugt einsetzbar.

Bevorzugt weist eine erfindungsgemäße Knopfzelle einen alkalischen Elektrolyten auf. Dieser wird vor dem Schließen des Gehäuses eindosiert und füllt die Poren der Elektroden mindestens teilweise aus.

Weiterhin ist es bevorzugt, dass eine erfindungsgemäße Knopfzelle einen Zellenbecher und/oder einen Zellendeckel mit einer Dicke von weniger als 0,15 mm aufweist.

Galvanische Elemente mit derart dünnen Gehäusekomponenten bieten ein entsprechend großes Innenvolumen und damit viel Raum für Aktivmaterial. Allerdings müssen auch solche Gehäuse Drücken standhalten können, die beispielsweise durch Gasentwicklung bei Überladung oder bei der Montage entstehen können, um ein Auslaufen von Elektrolyt zu verhindern.

Eine besonders hohe Dichtigkeit und mechanische Stabilität weist eine Knopfzelle mit einem Gehäuse aus einem Zellenbecher und einem Zellendeckel auf, die eine Dichtung aufweist, die sich an der Innenwand des Zellenbechers anliegend bis zum Boden des Zellenbechers erstreckt. Eine erfindungsgemäße Knopfzelle kann in bevorzugten Ausführungsformen eine derart ausgestaltete Dichtung aufweisen.

Aus dem Stand der Technik bekannte galvanische Elemente in Knopfzellenform weisen in aller Regel Dichtungen auf, die zwischen dem Zellendeckel und dem Zellen becher angeordnet sind, häufig auch um den Rand des Zellendeckels herumgeführt sind, so dass sie ins Innere der Zelle ragen. Der Zellendeckel und die Dichtung sind dabei stets oberhalb des Separators angeordnet, der den Innenrand bekannter Knopfzellen in ein oberes und ein unteres Kompartiment unterteilt.

Davon grenzt sich eine erfindungsgemäße Knopfzelle mit der beschriebenen Dichtung deutlich ab. Der zwischen positiver und negativer Elektrode angeordnete Separator weist keinen direkten Kontakt mit dem Zellenbecher oder dem Zellendeckel auf. Er schließt seitlich an die Dichtung an.

Vorzugsweise liegt die Dichtung einer erfindungsgemäßen Knopfzelle formschlüssig an der Innenwand des Zellenbechers an und ist möglichst dünn ausgebildet.

In einer bevorzugten Ausführungsform umschließt die Dichtung den Rand des Zellendeckels und gewährleistet damit eine hohe mechanische Stabilität. Insbesondere kann sie eine Ausnehmung aufweisen, in die der Rand des Zellendeckels eingeschoben werden kann. Der Zellendeckel sitzt in dieser Ausführungsform auf der Dichtung auf und kann insbesondere in Folge äußerer Drücke, wie sie beispielsweise beim Umbördeln des Randes des Zellenbechers auftreten, nicht in die Zellen hineingedrückt werden und dabei den Separator beschädigen.

Die beschriebenen erfindungsgemäßen Knopfzellen können sowohl eine Foliendichtung als auch eine Dichtung aus Spritzguß aufweisen.

Wie bereits einleitend bemerkt wurde, liegt der vorliegenden Erfindung insbesondere das Ziel zugrunde, kapazitätsoptimierte galvanische Elemente für Hörgeräte bereitzustellen. Entsprechend weist eine erfindungsgemäße Knopfzelle in bevorzugten Ausführungsformen die äußeren Dimensionen einer standardisierten Knopfzelle gemäß dem Standard IEC 60086-2 auf.

Die genannten und weitere Vorteile der Erfindung ergeben sich aus der nun folgenden Beschreibung bevorzugter Ausführungsformen und der Zeichnung in Verbindung mit den Unteransprüchen. Dabei können die einzelnen Merkmale der Erfindung für sich allein oder in Kombination miteinander verwirklicht sein. Die beschriebenen Ausführungsformen dienen lediglich zur Erläuterung und zum besseren Verständnis der Erfindung und sind in keiner Weise einschränkend zu verstehen.

### Figurenbeschreibung

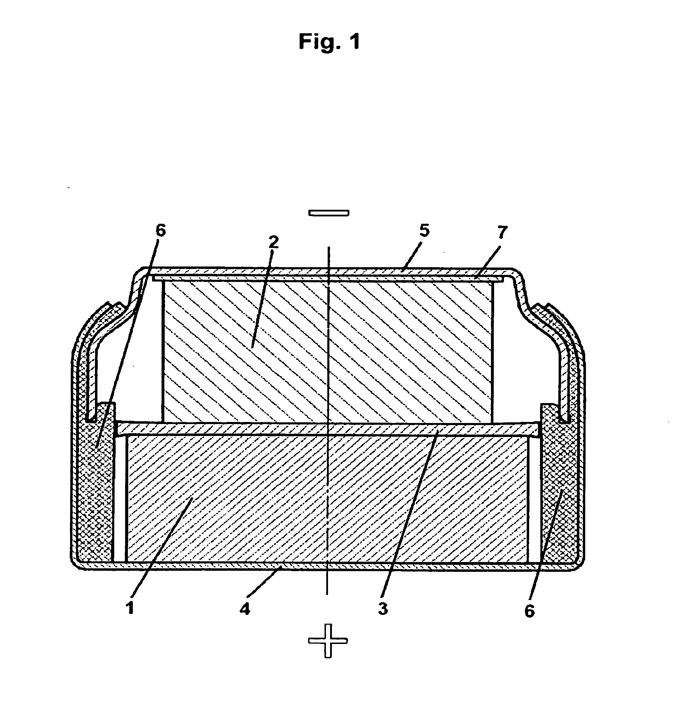

In Fig. 1 ist schematisch der Querschnitt einer erfindungsgemäßen Knopfzelle sowie eines erfindungsgemäßen Presslings (negative Elektrode) dargestellt. Die positive Elektrode (Kathode) 1 weist einen Nickelschaum auf, in den als Aktivmaterial Nickelhydroxid/Nickeloxidhydroxid (Ni(OH)₂/NiOOH) eingebettet ist. Oberhalb der positiven Elektrode 1 befindet sich der erfindungsgemäße Pressling als negative Elektrode (Anode) 2, die von der positiven Elektrode 1 durch den Separator 3 getrennt ist. Weder die negative Elektrode 2 noch die positive

Elektrode 1 weisen ein metallisches Körbchen als Stützgerüst auf. Beide Elektroden weisen eine selbsttragende Struktur auf. Die negative Elektrode 2 besteht im wesentlichen aus einer AB₅-Wasserstoffspeicherlegierung. Das Gehäuse des dargestellten galvanisches Elements besteht im wesentlichen aus dem Gehäusebecher 4 und dem Gehäusedeckel 5. Es besteht aus Edelstahl/nickelplatiertem Stahl (beispielsweise erhältlich unter der Handelsbezeichnung Hilumin®) und weist eine Dicke von weniger als 0,15 mm auf. Die Dichtung 6 deckt die Innenwand des Gehäusebechers vollständig ab. Sie isoliert zum einen den Gehäusebecher vom Gehäusedeckel, zum anderen weist sie eine Stützfunktion auf. Sie weist eine Ausnehmung auf, in der der Rand des Gehäusedeckels eingebettet ist und sorgt für entsprechende Stabilität gegen Druck, der beispielsweise beim Umbördeln des Gehäusebechers auftreten kann. Zwischen der negativen Elektrode 2 und dem Gehäusedeckel 5 ist das Federelement 7 aus Nickel angeordnet. Dieses fängt Volumenänderungen auf, denen die negative Elektrode beim Laden und Entladen des galvanisches Elements unterliegt.

### Beispiele

In verschiedenen Typen von Knopfzellen (Typ PR44, PR48, PR41 und PR70 gemäß IEC 60086-2) wurden negative Elektroden verbaut, die nicht in Körbchen aus Nickeldraht eingesetzt waren, sondern stattdessen als Preßlinge mit einer selbsttragenden Struktur hergestellt waren. Die Preßlinge wiesen abhängig vom Kopfzellentyp verschiedene Eigenschaften (Fläche, Höhe, Volumen, Gewicht) auf und waren bei verschiedenen Drücken verdichtet worden. In allen Fällen wurde die gleiche Wasserstoffspeicherlegierung mit einer bulk-Dichte von 7,95 g/cm³ verwendet. Es resultierte jeweils ein Preßling mit einer bestimmten Dichte und einer bestimmten Porosität (siehe Tabelle 1).

**(Tabelle 1)**

| IEC-Type | Preßkraft | Fläche | Preßdruck | Höhe | Volumen | Gewicht | Dichte | Poren |
|---|---|---|---|---|---|---|---|---|
| | kN | cm² | kN/cm² | mm | cm³ | mg | g/cm³ | vol% |
| PR44 | 45 | 0,52 | 87,3 | 2,35 | 0,121 | 700 | 5,78 | 27% |
| PR48 | 10 | 0,21 | 47,1 | 2,3 | 0,049 | 265 | 5,43 | 32% |
| PR41 | 13 | 0,21 | 61,2 | 1,45 | 0,031 | 170 | 5,52 | 31% |
| PR70 | 9 | 0,10 | 88,4 | 1,45 | 0,015 | 80 | 5,42 | 32% |

Bei allen Knopfzellen wurde eine höhere Kapazität gemessen als bei vergleichbaren Zellen mit herkömmlicher negativer Elektrode. Einige Meßdaten hierzu finden sich in Tabelle 2. Darüber hinaus wiesen alle Knopfzellen eine hervorragende Zyklenstabilität auf (mehrere hundert Zyklen).

**(Tabelle 2)**

| Type | IEC-Type | Kapazität mAh | Innenwiderstand mΩ (AC, 1 kHz) | Energiedichte Wh/l | Leistungsdichte W/l |
|---|---|---|---|---|---|
| 10 | PR70 | 12 | 2000 - 2500 | 158 | 1004 |
| 312 | PR41 | 23 | 800 - 1000 | 163 | 1322 |
| 13 | PR48 | 30 | 800 - 1000 | 142 | 882 |

## Patentansprüche

1. Knopfzelle mit einer positiven Elektrode, einer negativen Elektrode und einem Separator, die in einem Gehäuse aus einem Zellenbecher und einem Zellendeckel angeordnet sind, welche durch eine Dichtung gegeneinander isoliert sind, **dadurch gekennzeichnet, dass** die negative Elektrode als vorzugsweise tablettenförmiger Preßling mit selbsttragender Struktur vorliegt, wobei der Pressling eine Wasserstoffspeicherlegierung als Aktivmaterial sowie mindestens ein hydrophobes, nicht wasserlösliches Polymer aufweist und wobei der Pressling aus einem Pulver besteht, das bei einem Druck zwischen 40 kN/cm² und 120 kN/cm² verdichtet wurde.

2. Knopfzelle nach Anspruch 1, **dadurch gekennzeichnet, dass** die negative Elektrode aus einem Pulver besteht, das bei einem Druck zwischen 40 kN/cm² und 100 kN/cm², verdichtet wurde.

3. Knopfzelle nach Anspruch 1 oder Anspruch 2, **dadurch gekennzeichnet, dass** die negative Elektrode eine Dichte zwischen 5,0 g/cm³ und 7,5 g/cm³, insbesondere zwischen 5,0 g/cm³ und 6,5 g/cm³, aufweist.

4. Knopfzelle nach einem der vorhergehenden Ansprüche, **dadurch gekennzeichnet, dass** die Wasserstoffspeicherlegierung in Partikelform mit einer mittleren Partikelgröße zwischen 0,1 µm und 100 µm, vorzugsweise zwischen 10 µm und 50 µm, vorliegt.

5. Knopfzelle nach Anspruch 6, **dadurch gekennzeichnet, dass** das mindestens eine Polymer in Partikelform mit einer mittleren Partikelgröße zwischen 0,1 µm und 100 µm, vorzugsweise zwischen 10 µm und 50 µm, vorliegt.

6. Knopfzelle nach einem der vorhergehenden Ansprüche, **dadurch gekennzeichnet, dass** die negative Elektrode mindestens ein Leitmittel aufweist, insbesondere aus der Gruppe mit kohlenstoffbasierten, vorzugsweise amorphen Leitmitteln und metallischen Leitmitteln.

7. Knopfzelle nach einem der vorhergehenden Ansprüche, **dadurch gekennzeichnet, dass** die negative Elektrode einen Porengehalt zwischen 0,5 Vol-% und 40 Vol.-%, vorzugsweise zwischen 0,5 Vol-% und 15 Vol.-%, insbesondere zwischen 5 und 10 Vol-%, aufweist.

8. Knopfzelle nach einem der vorhergehenden Ansprüche, **dadurch gekennzeichnet, dass** die positive Elektrode Nickelhydroxid und/oder Nickeloxidhydroxid als Aktivmaterial aufweist.

9. Knopfzelle nach einem der vorhergehenden Ansprüche, **dadurch gekennzeichnet, dass** sich die Dichtung an der Innenwand des Zellenbechers anliegend bis zum Boden des Zellenbechers erstreckt.

10. Knopfzelle nach einem der vorhergehenden Ansprüche, **dadurch gekennzeichnet, dass** die Dichtung den Rand des Zellendeckels umschließt.

11. Knopfzelle nach einem der vorhergehenden Ansprüche, **dadurch gekennzeichnet, dass** es sich bei der Dichtung um eine Foliendichtung handelt.

12. Knopfzelle nach einem der vorhergehenden Ansprüche, **dadurch gekennzeichnet, dass** es sich bei der Dichtung um ein Dichtungsformteil aus Spritzguß handelt.

## Claims

1. A button cell having a positive electrode, a negative electrode and a separator which are arranged in a housing comprising a cell cup and a cell lid which are insulated from one another by a seal, **characterized in that** the negative electrode is present preferably as a tablet-shaped pressed body having a self-supporting structure, wherein said pressed body includes a hydrogen storage alloy as active material and at least one hydrophobic, water-insoluble polymer, and wherein said pressed body is made of a powder which has been compacted at a pressure in the range from 40 kN/cm² to 120 kN/cm².

2. The button cell according to claim 1, **characterized in that** the negative electrode is made of a powder which has been compacted at a pressure in the range from 40 kN/cm² to 100 kN/cm².

3. The button cell according to claim 1 or 2, **characterized in that** the negative electrode has a density in the range from 5.0 g/cm³ to 7.5 g/cm³, in particular in the range from 5.0 g/cm³ to 6.5 g/cm³.

4. The button cell according to any of the preceding claims, **characterized in that** the hydrogen storage alloy is present in particulate form having an average particle size in the range from 0.1 µm to 100 µm, preferably in the range from 10 µm to 50 µm.

5. The button cell according to claim 6, **characterized in that** the at least one polymer is present in particulate form having an average particle size in the range from 0.1 µm to 100 µm, preferably in the range from 10 µm to 50 µm.

6. The button cell according to any of the preceding claims, **characterized in that** the negative electrode comprises at least one conductive auxiliary, in particular from the group consisting of carbon-based conductive auxiliaries, preferably amorphous conductive auxiliaries, and metallic conductive auxiliaries.

7. The button cell according to any of the preceding claims, **characterized in that** the negative electrode has a pore content in the range from 0.5 % by volume to 40 % by volume, preferably in the range from 0.5 % by volume to 15 % by volume, in particular in the range from 5 % by volume to 10 % by volume .

8. The button cell according to any of the preceding claims, **characterized in that** the positive electrode comprises nickel hydroxide and/or nickel oxide hydroxide as active material.

9. The button cell according to any of the preceding claims, **characterized in that** the seal extends along and fitting the interior wall of the cell cup to the bottom of the cell cup.

10. The button cell according to any of the preceding claims, **characterized in that** the seal encloses the edge of the cell lid.

11. The button cell according to any of the preceding claims, **characterized in that** the seal is a film seal.

12. The button cell according to any of the preceding claims, **characterized in that** the seal is an injection-molded shaped seal.

## Revendications

1. Pile-bouton dotée d'une électrode positive, d'une électrode négative et d'un séparateur disposés dans un boîtier constitué d'une cuvette de pile et d'un couvercle de pile isolés l'un de l'autre par un joint d'étanchéité,
**caractérisée en ce que**
l'électrode négative présente de préférence la forme d'une pièce moulée sous pression en forme de comprimé et à structure autoportante,
**en ce que** la pièce moulée sous pression présente comme matériau actif un alliage accumulant l'hydrogène, ainsi qu'au moins un polymère hydrophobe insoluble dans l'eau et
**en ce que** la pièce moulée sous pression est constituée d'une poudre comprimée à une pression comprise entre 40 kN/cm² et 120 kN/cm².

2. Pile-bouton selon la revendication 1, **caractérisée en ce que** l'électrode négative est constituée d'une poudre comprimée à une pression comprise entre 40 kN/cm² et 100 kN/cm².

3. Pile-bouton selon la revendication 1 ou la revendication 2, **caractérisée en ce que** l'électrode négative présente une masse spécifique comprise entre 5,0 g/cm³ et 7,5 g/cm³ et en particulier entre 5,0 g/cm³ et 6,5 g/cm³.

4. Pile-bouton selon l'une des revendications précédentes, **caractérisée en ce que** l'alliage accumulant l'hydrogène présente la forme de particules d'une taille moyenne comprise entre 0,1 µm et 100 µm et de préférence entre 10 µm et 50 µm.

5. Pile-bouton selon la revendication 6, **caractérisée en ce que** le ou les polymères présentent la forme de particules d'une taille moyenne comprise entre 0,1 µm et 100 µm et de préférence entre 10 µm et 50 µm.

6. Pile-bouton selon l'une des revendications précédentes, **caractérisée en ce que** l'électrode négative présente au moins un agent conducteur, en particulier du groupe des agents conducteurs à base de carbone, de préférence amorphes, et des agents conducteurs métalliques.

7. Pile-bouton selon l'une des revendications précédentes, **caractérisée en ce que** l'électrode négative présente une teneur en pores comprise entre 0,5 % en volume et 40 % en volume, de préférence entre 0,5 % en volume et 15 % en volume et en particulier entre 5 % et 10 % en volume.

8. Pile-bouton selon l'une des revendications précédentes, **caractérisée en ce que** l'électrode positive présente de l'hydroxyde de nickel et/ou de l'oxyhydroxyde de nickel comme matériau actif.

9. Pile-bouton selon l'une des revendications précédentes, **caractérisée en ce que** le joint d'étanchéité s'étend jusqu'au fond de la cuvette de la pile en reposant contre la paroi intérieure de la cuvette de la pile.

10. Pile-bouton selon l'une des revendications précédentes, **caractérisée en ce que** le joint d'étanchéité entoure le bord du couvercle de la pile.

11. Pile-bouton selon l'une des revendications précédentes, **caractérisée en ce que** le joint d'étanchéité est un joint d'étanchéité en film.

12. Pile-bouton selon l'une des revendications précédentes, **caractérisée en ce que** le joint d'étanchéité est une pièce d'étanchéité moulée par injection.
